# EUROPÄISCHE PATENTSCHRIFT

(11) **EP 1 672 347 B1**
(45) Veröffentlichungstag und Bekanntmachung des Hinweises auf die Patenterteilung: **26.05.2010**
(21) Anmeldenummer: 05027575.9
(22) Anmeldetag: 16.12.2005
(51) Int. Cl.: G01M 13/02

(54) **Verfahren und Vorrichtung zur Durchführung einer Messung an einer Klauenkupplung**
Method and device for carrying out a measurement on a claw coupling
Procédé et dispositif destinés à la réalisation d'une mesure sur un accouplement à griffes

(30) Priorität: 18.12.2004 DE 102004061096
(43) Veröffentlichungstag der Anmeldung: 21.06.2006
(73) Patentinhaber: KTR KUPPLUNGSTECHNIK GMBH, D-48432 Rheine (DE)
(72) Erfinder: Kösters, Jürgen, 48366 Laer (DE); Daszkowski, Stefan, 48282 Emsdetten (DE)
(74) Vertreter: Siekmann, Gunnar

(56) Entgegenhaltungen:
- EP-A1- 1 420 182
- EP-B1- 1 004 009
- US-A- 4 783 998
- US-A- 5 990 473

## Beschreibung

Die Erfindung betrifft ein Verfahren zur Durchführung einer Messung an einer sich in Betrieb befindlichen Klauenkupplung mit zwei Kupplungshälften, die durch einen elastomeren Zahnkranz oder Einzelzähne aus einem elastomeren Material Drehmomente übertragend verbunden sind, bei dem ein einziger Lichtstrahl an dem sich drehenden Klauenbereich reflektiert wird. Weiterhin betrifft die Erfindung eine Vorrichtung zur Durchführung einer Messung an einer Klauenkupplung mit Kupplungshälften, die jeweils Klauen aufweisen, die Drehmomente übertragend ineinander eingreifen, mit genau einer Lichtstrahlerzeugungseinrichtung.

Derartige Klauenkupplungen sind bekannt und werden beispielsweise von der KTR Kupplungstechnik GmbH, Rodder Damm 170, 48432 Rheine, Deutschland unter dem Markennamen Rotex vertrieben und sind beispielsweise im Gesamtkatalog 2004 der Firma KTR auf den Seiten 17 ff beschrieben. Derartige Klauenkupplungen weisen in der Regel einen Zahnkranz aus einem elastomeren Werkstoff auf, dessen Zähne zwischen den ineinander greifenden Klauen angeordnet sind und eine gewisse Verdrehbarkeit der Kupplungshälften gegeneinander zulassen. An Stelle eines Zahnkranzes können auch einzelne Zahnelemente und Doppelzahnelemente eingelegt sein.

Aus der EP 1 420 182 A1 ist eine Messung bekannt, welche an einer elastischen Kupplung zur Ermittlung eines Verdrehwinkels zwischen zwei ineinandergreifenden Kupplungsteilen durchgeführt wird. Auf dem Umfang der beiden Kupplungsteile sind dazu Markierungen angeordnet. Im laufenden Betrieb der Kupplung wird mittels einer Stroboskoplampe ein intermittierender Lichtstrahl erzeugt, welcher auf den Bereich um die Markierungen gerichtet ist. Ist die Blitzfrequenz der Stroboskoplampe mit der Drehzahl der Kupplung synchronisiert, ist ein stehendes Abbild der Markierungen erzeugt und es kann der Verdrehwinkel zwischen den beiden Kupplungsteilen abgelesen werden.

Aus der Druckschrift EP 1 004 009 B1 ist weiterhin eine Torsionsstange bekannt, welche vornehmlich in Lenksystemen von Fahrzeugen Anwendung findet und zur Begrenzung eines Verdrehwinkels innerhalb des Lenksystemes dient. Dazu ist die Torsionsstange beispielsweise mit zylinderförmigen Gitterelementen ausgerüstet, die mit deren jeweiligen Enden verbunden sind und abwechselnd ineinandergreifende Erhebungen aufweisen. Oberhalb der ineinandergreifenden Erhebungen ist über einen vorbestimmten Bereich eine Anordnung von mehreren Detektoren vorgesehen, welche eine an dem Bereich der Erhebungen reflektierte, elektromagnetische Strahlung aufnimmt. Die Detektoren empfangen insbesondere ein die Ausrichtung der ineinandergreifenden Erhebungen der Gitterelemente wiedergebendes, Muster, welches von einer Bilderkennung analysiert wird. Die ähnlich einer Fotographie abgebildeten Reflektionsabschnitte der beiden ineinandergreifenden Gitterelemente werden anschließend vermessen und darüber das im Lenksystem wirkende Drehmoment ermittelt.

Der Erfindung liegt die Aufgabe zugrunde, ein Verfahren und eine Vorrichtung der eingangs genannten Art zu schaffen, mit denen auf besonders einfache Weise eine Überwachung der Klauenkupplung möglich ist.

Die Lösung dieser Aufgabe erfolgt mit einem Verfahren mit den Merkmalen des Patentanspruchs 1 und mit einer Vorrichtung mit den Merkmalen des Patentanspruchs 7. Vorteilhafte Ausgestaltungen der Erfindung sind in den Unteransprüchen angegeben.

Bei einem Verfahren zur Durchführung einer Messung an einer sich im Betrieb befindlichen Klauenkupplung mit zwei Kupplungshälften, die durch einen elastomeren Zahnkranz oder Einzelzähne aus einem elastomeren Material Drehmomente übertragend verbunden sind, bei dem genau ein Lichtstrahl auf den sich drehenden Klauenbereich gerichtet und von diesem reflektiert wird, ist es erfindungswesentlich, daß der reflektierte Lichtstrahl von genau einem Empfänger empfangen wird, und mindestens ein Bereich, insbesondere der Abstand, zwischen zwei benachbarten, ineinandergreifenden Klauen gemessen wird, wobei die Ermittlung des Abstandes zwischen den Klauen auf Basis eines Vergleiches der Zeitdauer der Reflektion an einer reflektierenden Klaue mit der Zeitdauer der Reflektion im weniger reflektierenden Bereich zwischen zwei Klauen vorgenommen wird.

Auf Basis dieser Information ist es möglich, unter Berücksichtigung eines normalen Abstandes zwischen zwei Klauen, also einer Klauenkupplung die nicht in Betrieb ist, den Verdrehwinkel der beiden Kupplungshälften im normalen Betrieb der Klauenkupplung zu bestimmen. Das Verfahren ist mit einer einzigen Messung ausführbar. Die Messung ist daher mit einem vergleichsweise geringen Aufwand durchführbar. Die Messung wird als optische Messung durchgeführt, wobei genau ein Lichtstrahl auf den Klauenbereich gesendet wird, der an der Oberfläche der metallischen Klauen wesentlich stärker reflektiert wird als an der Oberfläche des gegebenenfalls zwischen den Klauen angeordneten Elastomers des Zahnkranzes. Der Lichtstrahl wird also am sich drehenden Klauenbereich unterschiedlich stark reflektiert und von einem Empfänger entsprechend ausgewertet. Die Reflektion an den metallischen Klauen wird dabei mit der Reflektion am Bereich zwischen den metallischen Klauen zeitlich verglichen. Da die Breite der metallischen Klauen unverändert bleibt, kann man bei laufendem Betrieb aus dem Vergleich der beiden Werte einen drehzahlunabhängigen Wert erhalten.

Es ist auch möglich, spezielle Teststände zu bauen und dort die Klauenkupplung unter definierten Bedingungen zu prüfen. Ein besonderer Vorteil der Erfindung besteht darin, daß diese an normalen oder in Serie produzierten Klauenkupplungen durchgeführt werden kann, die zur Durchführung der Messung nicht modifiziert werden brauchen. Das erfindungsgemäße Messverfahren nutzt die Klauenkupplung als solche, ohne daß diese verändert werden müßte.

Bevorzugt werden mindestens zwei benachbarte Abstände zwischen den ineinandergreifenden Klauen gemessen. Die Abstände werden dann miteinander verglichen, da aufgrund der Verdrehung der Kupplungshälften gegeneinander einer der Abstände vergrößert gegenüber dem Normalabstand ist und einer der beiden Abstände verkleinert gegenüber dem Normalabstand ist. In einer besonders bevorzugten Ausführungsform wird die Messung fortlaufend für jeden Abstand zwischen den ineinander greifenden Klauen durchgeführt. Auf diese Weise kann man eine permanente Überwachung erreichen.

Bei einer kontinuierlichen Messung jeder Klaue und jedes Abstands zwischen den Klauen kann bei bekannter Klauenanzahl der Kupplung mit dem erfindungsgemäßen Messverfahren auch die Drehzahl der Kupplung bestimmt werden.

Aus der Messung wird zunächst eine Information über den Verdrehwinkel der Kupplungshälften gegeneinander erhalten. Aus der Messung kann bevorzugt eine Information über das Drehmoment abgeleitet werden. Dies insbesondere dann, wenn das Verformungsverhalten des Zahnkranzes bekannt ist. Dann kann aus dem errechneten Verdrehwinkel der Kupplungshälften eine Information über das Drehmoment abgeleitet werden. In einer anderen bevorzugten Ausgestaltung der Erfindung kann aus der Messung eine Information über den Zustand, insbesondere den Verschleißzustand, eines zwischen den Klauen der Kupplungshälften einsetzbaren Zahnkranzes abgeleitet werden, nämlich insbesondere dann, wenn ein bestimmtes Drehmoment an die Kupplung angelegt wird und dabei bekannt ist, welcher Verdrehwinkel sich bei noch intaktem Zahnkranz bei diesem bestimmten Drehmoment maximal ergeben dürfte. In einer weiteren bevorzugten Ausführungsform der Erfindung wird aus der Messung eine Information über den Zustand einer größeren Einheit, in der die Klauenkupplung angeordnet ist, abgeleitet. Bei Betrieb einer größeren Einheit, insbesondere einer größeren Maschine, kann als Auffälligkeit registriert werden, daß sich bei eigentlich gleichen Einstellungen der Verdrehwinkel der Kupplungshälften vergrößert hat, also ein größeres Drehmoment an der Kupplung anliegt. Dies deutet daraufhin, daß die größere Einheit nicht optimal läuft und gewartet werden muß.

Bei einer Vorrichtung zur Durchführung einer Messung an einer sich in Betrieb befindlichen Klauenkupplung mit zwei Kupplungshälften, die jeweils Klauen aufweisen, die Drehmomente übertragend in die Klauen der jeweils anderen Kupplungshälfte eingreifen, mit genau einer Lichtstrahlerzeugungseinrichtung, insbesondere zur Durchführung des oben beschriebenen Verfahrens, ist es erfindungswesentlich, daß die Lichtstrahlerzeugungseinrichtung mindestens eine LED aufweist, daß die Lichtstrahlerzeugungseinrichtung derart auf die Klauenkupplung gerichtet ist, daß der erzeugte Lichtstrahl bei sich drehender Klauenkupplung abwechselnd auf die reflektierenden Klauen und die weniger reflektierenden Bereiche zwischen den Klauen trifft und daß die Vorrichtung einen Empfänger zur Detektion des reflektierten Lichtstrahls aufweist, wobei der Empfänger mindestens eine Fotodiode, eine Signalaufbereitungseinheit und eine Berechnungseinheit zur Berechnung eines Abstandes zwischen den Klauen auf Basis eines Vergleiches der Zeitdauer der Reflektion an einer reflektierenden Klaue mit der Zeitdauer der Reflektion im weniger reflektierenden Bereich zwischen zwei Klauen aufweist.

Durch die unterschiedlich starke Reflexion des Lichtstrahls im Klauenbereich, nämlich einmal an der Oberfläche der metallischen Nocken und einmal an der Oberfläche des Zahnkranzes, der aus dem Elastomer besteht, können die Abstände zwischen den einzelnen Klauen, nämlich die Bereiche, in denen der Zahnkranz den Abstand zwischen den Klauen bestimmt, gemessen werden. Dafür genügt genau eine Lichtstrahlerzeugungseinrichtung.

Für die Vorrichtung ist dabei der Abstand zwischen der Klauenkupplung und der Lichtstrahlerzeugungseinrichtung und dem Empfänger, welcher bevorzugt eine Signalaufbereitungseinheit und eine Berechnungseinheit aufweist, variabel. Der Abstand ist in einem vergleichsweise großen Bereich relativ frei wählbar und nicht durch die erfindungsgemäße Vorrichtung auf einen ganz bestimmten Abstand festgelegt.

Der Empfänger ist zudem bevorzugt als Fotodetektor ausgebildet. Die Lichtstrahlerzeugungseinrichtung und der Empfänger sind bevorzugt als Reflexlichtschranke ausgebildet.

Nachfolgend wird die Erfindung anhand eines in der Zeichnung dargestellten bevorzugten Ausführungsbeispiels weiter erläutert. Im Einzelnen zeigen die schematischen Darstellungen in:
- Fig. 1: eine Klauenkupplung mit einer erfindungsgemäßen Kupplung;
- Fig. 2: eine Ansicht einer Klauenkupplung, bei der die Kupplungshälften gegeneinander verdreht sind;
- Fig. 3: eine Ansicht einer Kupplungshälfte mit Zahnkranz;
- Fig. 4: eine schematische Darstellung des Empfängers der erfindungsgemäßen Vorrichtung; und
- Fig. 5: zwei Messreihen.

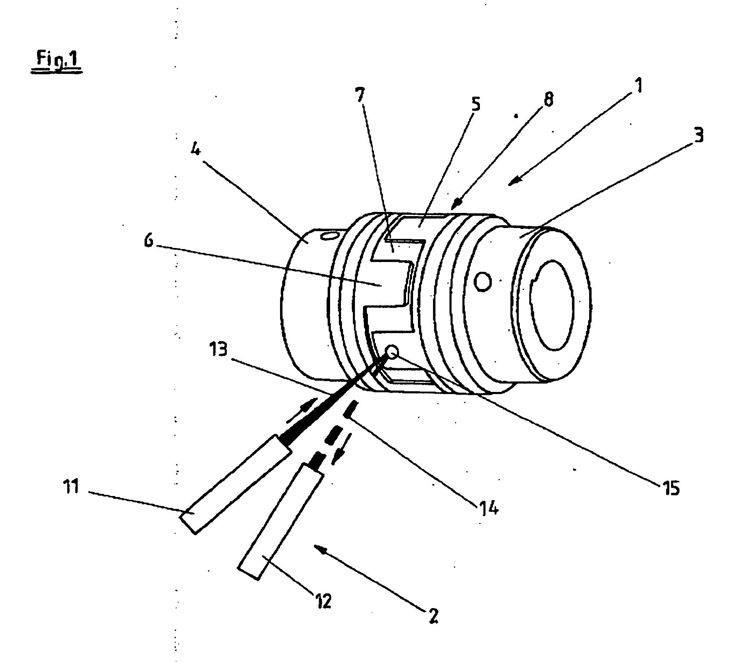

In Figur 1 ist eine Klauenkupplung 1 und eine erfindungsgemäße Vorrichtung 2 zur Durchführung einer Messung an der Klauenkupplung 1 dargestellt. Die Klauenkupplung 1 besteht aus zwei Kupplungshälften 3 und 4, wobei die Klauen 5 der Kupplungshälfte 3 und die Klauen 6 der Kupplungshälfte 4 ineinander eingreifen und gemeinsam einen Klauenbereich 8 bilden. Die einzelnen Klauen 5 und 6 sind mit einem gewissen Abstand zueinander ausgebildet. Eine dieser den Abstand ausbildenden Flächen ist in Figur 1 mit 7 bezeichnet. In diesen Flächen liegen Zähne eines Zahnkranzes oder Einzelzähne aus einem elastomeren Material. Der Sender 11 der Vorrichtung 2 sendet einen Lichtstrahl 13 aus, der auf einen Punkt 15 im Klauenbereich 8 gerichtet ist. Von dort wird das Licht reflektiert und der reflektierte Lichtstrahl 13 wird von einem Empfänger 12 empfangen und weiter ausgewertet Die Oberflächen der metallischen Nocken 5 und 6 reflektieren das Licht wesentlich stärker als die Oberfläche des Elastomers des Zahnkranzes in den Bereichen 7 zwischen den Nocken. Nach entsprechender Aufbereitung entsteht ein Rechtecksignal mit der Zuordnung "Hoher Pegel" bei Klauen 5 und 6 und "niedriger Pegel" bei den Abständen zwischen den Klauen oder Nocken 7. Bei einer Kupplung mit vier Klauen oder Nocken pro Kupplungshälfte erhält man eine Rechteckkurve mit 8 "hoch" und 8 "niedrig" Pegeln (oder 8 high und 8 low Pegeln) pro Umlauf.

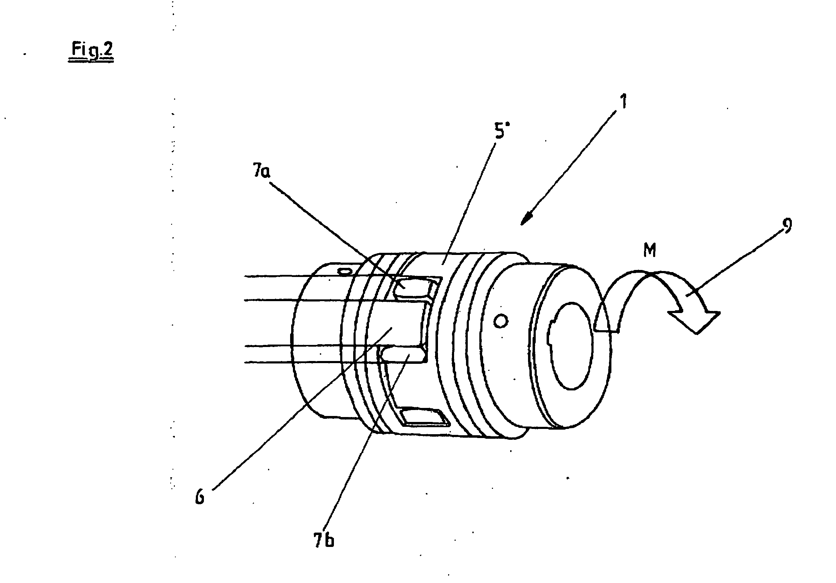

In Figur 2 ist eine Kupplung 1 dargestellt, die mit einem Drehmoment M in Richtung des Pfeils 9 gedreht wird. Aufgrund der Belastung verändern sich die Abstände zwischen den ineinander greifenden Klauen 5 und 6. Die Kupplungshälften verdrehen sich um eine gewisse Gradzahl gegeneinander und der Zahnkranz wird bei der Drehmomentbelastung zusammen gedrückt. Der Abstand 7b ist beispielsweise gegenüber der unbelasteten Darstellung in Figur 1 verringert, während der Abstand 7a gegenüber der unbelasteten Kupplung vergrößert ist. Während die reflektierenden Klauen eine konstante Länge besitzen, wechselt die Durchlaufzeit der Kunststoffzähne zwischen zwei Werten hin und her.

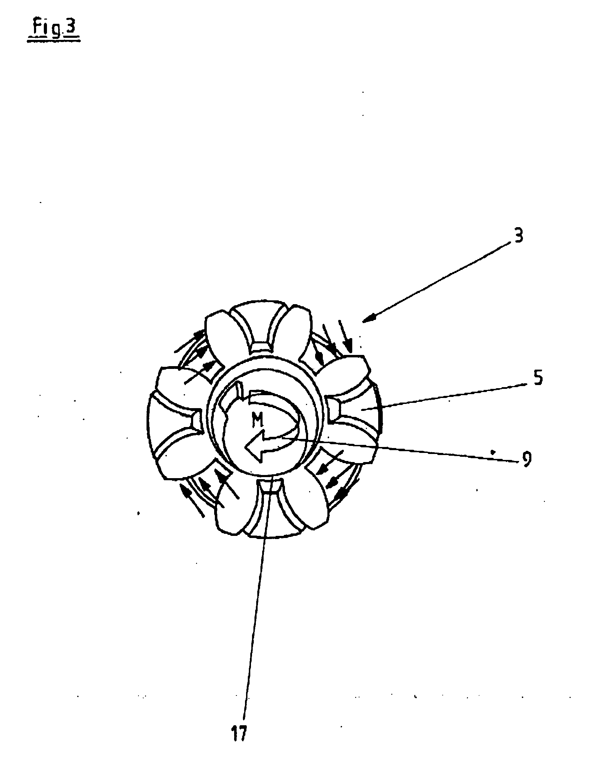

In Figur 3 ist eine Kupplungshälfte 3 mit Klauen 5 und einem darin eingelegten Zahnkranz 17 dargestellt, wobei jeweils jeder zweite Zahn entsprechend der angedeuteten Pfeile zusammen gepreßt wird.

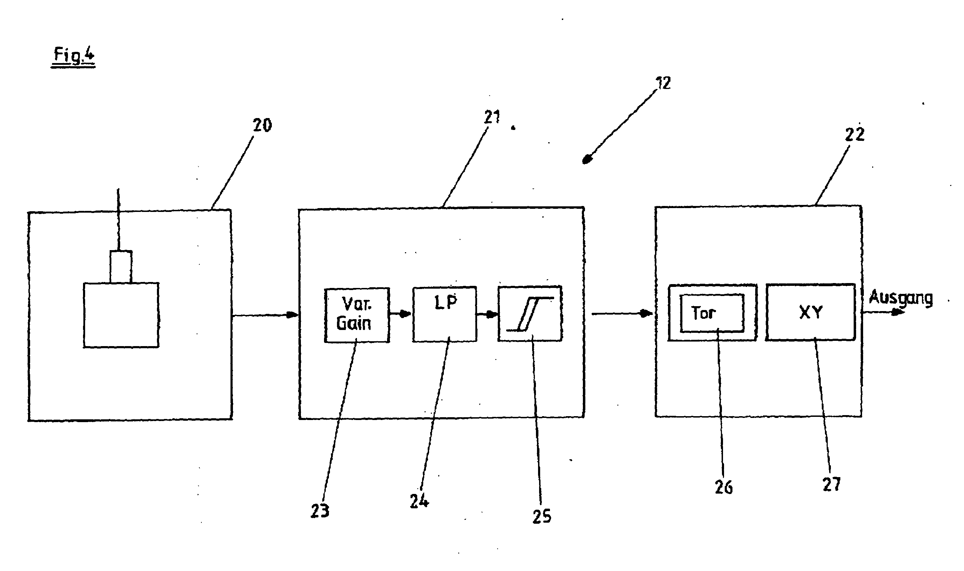

In Figur 4 ist der Empfänger 12 schematisch dargestellt, der eine Optik 20, eine Signalaufbereitung 21 und einen Mikroprozessor 22 aufweist. Die Optik 20 weist eine Reflexlichtschranke auf, die die vom Sender auf die Klauenkupplung gesendeten und dort reflektierten Lichtimpulse empfängt. Das so erhaltene Signal wird in der Signalaufbereitung 21 digitalisiert, wobei das Signal zunächst auf eine variable Verstärkung 23, dann auf einen Tiefpassfilter 24 und dann auf einen Schmitt-Trigger 25 gegeben wird, so daß aus dem Sinussignal ein Rechtecksignal wird. Das so erhaltene Signal wird dem Mikroprozessor 22 zugeleitet, wobei in einem ersten Schritt mit einer Torschaltung 26 eine Zeitintervallmessung zwischen den einzelnen Impulsen erfolgt und in einer Berechnungseinheit 27 die Zeitintervalle umgerechnet werden in Abstände bzw. letztlich in einen Verdrehwinkel zwischen den beiden Kupplungshälften. Eine weitere Auswertung entsprechend der oben angesprochenen Möglichkeit kann sich anschließen.

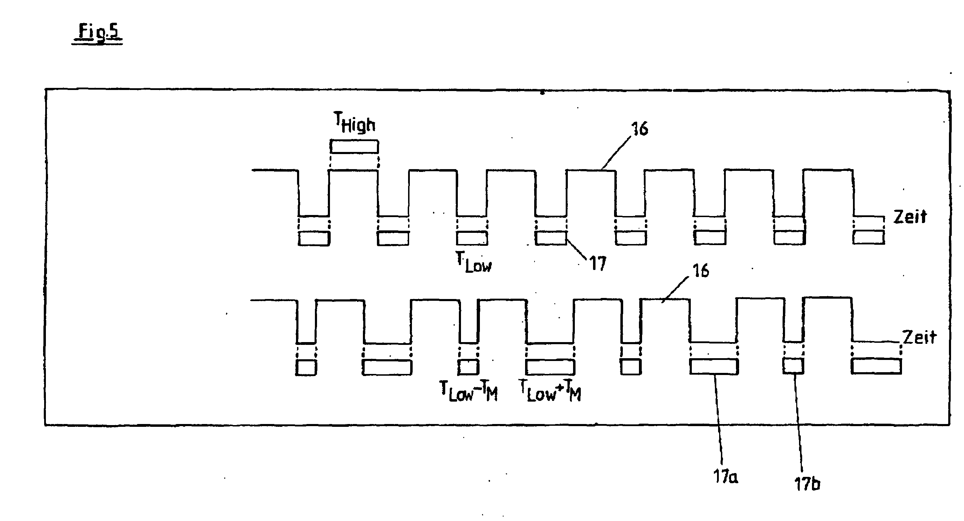

In Figur 5 sind zwei Messkurven dargestellt, so wie sie nach der Signalaufbereitung (in idealisierter Form) erhalten werden. Die obere Kurve zeigt die Rechteckkurve ohne Drehmoment. Die Zeiten der high Pegel sind konstant. Die Zeiten der low Pegel sind konstant. Der high Pegel entsteht durch die Reflexion des Lichts an den metallischen Teilen der Klauenkupplung, während die low Pegel durch die wesentlich schwächere Reflexion des Lichts an dem nichtmetallischen Zahnkranz entstehen. Die untere Kurve zeigt eine Messung an einer Klauenkupplung mit Drehmoment. Die high Pegel 16 sind erwartungsgemäß wieder konstant, da die Klauen unverändert bleiben. Die Zeiten der low Pegel 17 ändern sich jedoch, so wie dies auch entsprechend Figur 2 zu erwarten war. Es kann nun entweder aus den Absolutwerten bzw. dem absoluten Differenzbetrag der Zeiten der verschiedenen low Pegel 17a und 17b eine Berechnung erfolgen oder bezogen auf das konstante high Signal kann ein relativer Faktor TM/T high berechnet werden, welcher drehzahlunabhängig Informationen über den Verdrehwinkel gibt.

## Patentansprüche

1. Verfahren zur Durchführung einer Messung an einer sich in Betrieb befindlichen Kupplung mit zwei Kupplungshälften (3, 4), die durch einen elastomeren Zahnkranz oder Einzelzähne aus einem elastomeren Material Drehmomente übertragend verbunden sind, bei dem ein einziger Lichtstrahl an dem sich drehenden Klauenbereich reflektiert wird,
**dadurch gekennzeichnet,**
**dass** der reflektierte Lichtstrahl von genau einem Empfänger aufgenommen wird, und
**dass** darüber mindestens ein Abstand zwischen zwei benachbarten, ineinander greifenden Klauen (5, 6) ermittelt wird, wobei die Ermittlung des Abstandes zwischen den Klauen (5, 6) auf Basis eines Vergleiches der Zeitdauer der Reflektion an einer reflektierenden Klaue (5, 6) mit der Zeitdauer der Reflektion im weniger reflektierenden Bereich zwischen zwei Klauen (5, 6) vorgenommen wird.

2. Verfahren nach Anspruch 1, **dadurch gekennzeichnet, dass** zwei benachbarte Abstände zwischen den ineinander greifenden Klauen (5, 6) gemessen und die Abstände miteinander verglichen werden.

3. Verfahren nach einem der vorhergehenden Ansprüche, **dadurch gekennzeichnet, dass** die Messung fortlaufend für jeden Abstand zwischen den ineinander greifenden Klauen (5, 6) durchgeführt wird.

4. Verfahren nach einem der vorhergehenden Ansprüche, **dadurch gekennzeichnet, dass** aus der Messung eine Information über den Verdrehwinkel abgeleitet wird.

5. Verfahren nach einem der Ansprüche 1 bis 4, **dadurch gekennzeichnet, dass** aus der Messung eine Information über den Verschleißzustand eines zwischen den Klauen eingesetzten Zahnkranzes abgeleitet wird.

6. Verfahren nach einem der Ansprüche 1 bis 4, **dadurch gekennzeichnet, dass** aus der Messung eine Information über den Zustand einer größeren Einheit, in der die Klauenkupplung angeordnet ist, abgeleitet ist.

7. Vorrichtung zur Durchführung einer Messung an einer sich in Betrieb befindlichen Klauenkupplung mit zwei Kupplungshälften, die jeweils Klauen aufweisen, die Drehmomente übertragend in die Klauen der anderen Kupplungshälfte eingreifen, mit genau einer Lichtstrahlerzeugungseinrichtung, insbesondere zur Durchführung eines Verfahrens nach einem der Ansprüche 1 bis 6,
**dadurch gekennzeichnet,**
**dass** die Lichtstrahlerzeugungseinrichtung mindestens eine LED aufweist,
**dass** die Lichtstrahlerzeugungseinrichtung (11) derart auf die Klauenkupplung gerichtet ist, dass der erzeugte Lichtstrahl bei sich drehender Klauenkupplung abwechselnd auf die reflektierenden Klauen und die weniger reflektierenden Bereiche zwischen den Klauen trifft, und
**dass** die Vorrichtung (1) genau einen Empfänger (12) zur Detektion des reflektierten Lichtstrahls aufweist, wobei der Empfänger mindestens eine Fotodiode, eine Signalaufbereitungseinheit (21) und eine Berechnungseinheit (27) zur Ermittlung des Abstandes zwischen den Klauen (5, 6) auf Basis eines Vergleiches der Zeitdauer der Reflektion an einer reflektierenden Klaue (5, 6) mit der Zeitdauer der Reflektion im weniger reflektierenden Bereich zwischen zwei Klauen (5, 6) aufweist.

8. Vorrichtung nach Anspruche 7 nach, **dadurch gekennzeichnet, dass** die Berechnungseinheit (27) Teil eines Mikroprozessors (22) ist.

## Claims

1. A method for carrying out a measurement on an operating clutch with two clutch halves (3, 4) which are connected through an elastomer ring gear or individual teeth of an elastomer material in a rotational moment transmitting manner, wherein a single light beam is reflected on the rotating claw region,
**characterized in**
**that** the reflected light beam is picked up by exactly one receiver and
**that** in addition at least one spacing between two neighbouring inter-engaging claws (5, 6) is determined, wherein the determination of the spacing between the claws (5, 6) is performed on the basis of a comparison of the duration of the reflection on a reflecting claw (5, 6) with the duration of the reflection in the less reflecting region between two claws (5, 6).

2. The method according to Claim 1, **characterized in that** two neighbouring spacings between the inter-engaging claws (5, 6) are measured and the spacings compared with each other.

3. The method according to any one of the preceding claims, **characterized in that** the measurement is carried out continuously for each spacing between the inter-engaging claws (5, 6).

4. The method according to any one of the preceding claims, **characterized in that** from the measurement information concerning the angle of twist is derived.

5. The method according to any one of the Claims 1 to 4, **characterized in that** from the measurement information concerning the wear state of a ring gear employed between the claws is derived.

6. The method according to any one of the Claims 1 to 4, **characterized in that** from the measurement information concerning the state of a larger unit, in which the claw clutch is arranged, is derived.

7. A device for carrying out a measurement on an operating claw clutch with two clutch halves each of which having claws which inter-engage with the claws of the other clutch half in a rotational moment transmitting manner with exactly one light beam generating device, more preferably for carrying out a method according to any one of the Claims 1 to 6,
**characterized in**
**that** the light beam generating device comprises at least one LED,
**that** the light beam generating device (11) is directed on to the claw clutch in such a manner that the generated light beam with rotating claw clutch alternatively impinges on the reflecting claws and the less reflecting regions between the claws, and
**that** the device (1) comprises exactly one receiver (12) for detecting the reflected light beam, wherein the receiver comprises at least one photo diode, a signal processing unit (21) and a calculating unit (27) for determining the spacing between the claws (5, 6) based on a comparison of the duration of the reflection on a reflecting claw (5, 6) with the duration of the reflection in the less reflecting region between two claws (5, 6).

8. The device according to Claim 7, **characterized in that** the calculating unit (27) is part of a microprocessor (22).

## Revendications

1. Procédé pour effectuer une mesure sur un accouplement se trouvant en service avec deux moitiés d'accouplement (3, 4), qui sont reliées en transmettant des couples par une couronne dentée élastomère ou des dents individuelles à base d'un matériau élastomère, avec lequel un unique faisceau de lumière est réfléchi sur la zone de griffes rotative,
**caractérisé en ce que**
le faisceau de lumière réfléchi est réceptionné par exactement un récepteur, et
**en ce qu'**au moins un espacement entre deux griffes (5, 6) voisines et s'emboîtant l'une dans l'autre est déterminé par ce moyen, la détermination de l'espacement entre les griffes (5, 6) étant effectuée sur la base d'une comparaison de la durée de la réflexion sur une griffe (5, 6) réfléchissante avec la durée de la réflexion dans la zone moins réfléchissante entre deux griffes (5, 6).

2. Procédé selon la revendication 1, **caractérisé en ce que** deux espacements voisins entre les griffes (5, 6) s'emboîtant l'une dans l'autre sont mesurés et les espacements comparés l'un avec l'autre.

3. Procédé selon l'une quelconque des revendications précédentes, **caractérisé en ce que** la mesure est effectuée de façon continue pour chaque espacement entre les griffes (5, 6) s'emboîtant l'une dans l'autre.

4. Procédé selon l'une quelconque des revendications précédentes, **caractérisé en ce qu'**une information sur l'angle de torsion est déduite de la mesure.

5. Procédé selon l'une quelconque des revendications 1 à 4, **caractérisé en ce qu'**une information sur l'état d'usure d'une couronne dentée insérée entre les griffes est déduite de la mesure.

6. Procédé selon l'une quelconque des revendications 1 à 4, **caractérisé en ce qu'**une information sur l'état d'une unité assez grande, dans laquelle l'accouplement à griffes est disposé, est déduite de la mesure.

7. Dispositif pour effectuer une mesure sur un accouplement à griffes se trouvant en service avec deux moitiés d'accouplement, qui présentent respectivement des griffes, lesquelles s'engagent en transmettant des couples dans les griffes de l'autre moitié d'accouplement, avec exactement un dispositif de production de faisceau lumineux, en particulier pour la mise en oeuvre d'un procédé selon l'une quelconque des revendications 1 à 6,
**caractérisé en ce que**
le dispositif de production de faisceau lumineux présente au moins une LED,
**en ce que** le dispositif de production de faisceau lumineux (11) est axé sur l'accouplement à griffes de telle sorte que le faisceau lumineux généré arrive, dans le cas de l'accouplement à griffes rotatif, alternativement sur les griffes réfléchissantes et les zones moins réfléchissantes entre les griffes, et
**en ce que** le dispositif (1) présente exactement un récepteur (12) pour la détection du faisceau lumineux réfléchi, le récepteur présentant au moins une photodiode, une unité de traitement de signal (21) et une unité de calcul (27) pour la détermination de l'espacement entre les griffes (5, 6) sur la base d'une comparaison de la durée de réflexion sur une griffe (5, 6) réfléchissante avec la durée de la réflexion dans la zone moins réfléchissante entre deux griffes (5, 6).

8. Dispositif selon la revendication 7, **caractérisé en ce que** l'unité de calcul (27) fait partie d'un microprocesseur (22).
